# EUROPEAN PATENT SPECIFICATION

(11) **EP 3 513 147 B1**
(45) Date of publication and mention of the grant of the patent: **30.09.2020**
(21) Application number: 17771525.7
(22) Date of filing: 13.09.2017
(51) Int. Cl.: G01C 21/34, G05D 1/02

(54) **METHOD AND SYSTEM FOR DETERMINING A ROUTE BASED ON SOLAR RADIATION INFORMATION**
VERFAHREN UND SYSTEM ZUR ROUTENBESTIMMUNG AUF GRUND VON SONNENSTRAHLUNGSINFORMATIONEN
PROCÉDÉ ET SYSTÈME POUR DÉTERMINER UN ITINÉRAIRE BASÉ SUR DES INFORMATIONS DE RAYONNEMENT SOLAIRE

(30) Priority: 13.09.2016 GB 201615530
(43) Date of publication of application: 24.07.2019
(73) Proprietor: Arrival Limited, London W14 8TS (GB)
(72) Inventor: LESZCZYNSKI, Mirek, Banbury, Oxfordshire OX16 2SN (GB)
(74) Representative: Korenberg, Alexander Tal
(86) International application number: PCT/GB2017/052685
(87) International publication number: WO 2018/051076

(56) References cited:
- WO-A1-2011/010392
- DE-A1-102009 022 280
- DE-A1-102010 042 411
- GB-A- 2 522 648
- JP-A- 2000 353 295
- US-A1- 2015 269 292

## Description

### Field

This specification relates to a vehicle routing system and a method of using a vehicle routing system. Specifically, this specification relates to a vehicle routing system which selects a planned route for solar powered vehicles such that an optimal amount of solar radiation can be received at the vehicle during the planned route.

### Background

Due to at least in part to the high costs of fossil fuels and the steadily decreasing worldwide supply of oil resources, there is a growing interest in the use of alternate sources of energy for powering vehicles, such as automobiles, trucks, buses, etc.

It is now increasingly popular to use solar radiation for providing electricity to power vehicles. A large proportion of the solar vehicles currently available are hybrid vehicles which utilises both electric and solar energy as power sources. Solar vehicles which are completely powered by electricity have also been developed by the automobile industry, and these vehicles usually require a high conversion efficiency of incident solar radiation into electricity in order to meet their operational needs.

DE 10 2009 022280 describes a method involving providing information about a driving route and/or a parking possibility and/or the driving route and/or the parking possibility with a maximum solar radiation to a driver when a route guidance is activated. The information is determined based on a momentary position of a vehicle (1), an actual date and/or an actual time, where the vehicle is provided with a photovoltaic module (3) that is located on a vehicle roof (1.2). An independent claim is also included for a device for operating a vehicle.

DE 10 2010 042411 describes a system (10) having a card module (1) comprising a topographic card, and a route determination device (6) connected with the card module and an input and/or output device (3). A computation module (2) is connected with the card module, and determines solar altitudes at a card position. The route determination device determines a target guidance route from a starting point to a target point by considering the solar altitudes, and provides the route to a user using the input and/or output device. The route determination device considers alignment of a motor car to the altitudes.

JP 2000 353295 is directed to guiding a vehicle to a route which is irradiated by much solar light at the time of guiding a route for a vehicle. The navigation ECU 10 of a route guiding device for a vehicle retrieves a route leading to the destination by using map data for search stored in a map database 14, and displays it on a display 16 for guiding a vehicle. When the terminal voltage of a battery 24 for storing the power of a solar battery 22 becomes lower, the navigation ECU 10 guides the vehicle by researching a route with a large solar irradiation intensity. This research is executed by cost arithmetic operation with the level of solar irradiation as sunshine costs. The sunshine costs are calculated according to an object near a link and time.

US 2015/269292 describes an insolation information generating device having a mesh generator to generate meshes by projecting a solar trajectory on a celestial sphere onto a plurality of mesh positions on a two-dimensional plane, a solar position calculator to calculate a solar position, a feature road shape storage to store three-dimensional information on feature and road shapes, a feature road shape acquisition module to acquire three-dimensional information of a feature and a road located around each of a plurality of regions of interest, an insolation information calculator to determine whether sunlight from each solar position calculated by the solar position calculator is blocked by a feature acquired by the feature road shape acquisition module to calculate at least either one of a sunny ratio and a shady ratio, and an insolation information storage to store each mesh position and at least either one of the corresponding sunny ratio and shady ratio.

WO 2011/010392 describes a solar light intensity estimating device (100) which estimates the irradiation intensity of solar light. A positional information acquiring section (101) acquires the positional information of the current point of the solar light intensity estimating device (100). A meteorological information acquiring section (102) acquires the meteorological information of the current point. A power generating capacity information acquiring section (103) acquires information relating to the power generating capacity of a photovoltaic power generating device (120) positioned at the current point. An estimation section (104) estimates the irradiation intensity of the solar light at the current point based on the meteorological information acquired by the meteorology information acquiring section (102) and the information relating to the power generating capacity acquired by the power generating capacity information acquiring section (103).

### Summary of the Invention

An invention is set out in the appended claims.

### Overview of the Specification

In a first aspect, this specification describes a method for selecting a planned route for a vehicle, the method comprising: receiving at least one location to be visited by the vehicle; receiving information relating to an amount of solar radiation that can be received by the vehicle in a road network including a starting location and the received at least one location to be visited by the vehicle; analysing the received information; and selecting the planned route starting from the starting location and including the. at least one location to be visited by the vehicle based on the analysis.

The received information relating to an amount of solar radiation that can be received by the vehicle may comprise at least one of: sun location, time of day, topographic information, current weather information, and predicted future weather information.

The method may further comprise receiving a shortest route starting from the starting location and including the at least one location to be visited by the vehicle.

The method may further comprise determining a shortest route starting from the starting location and including the at least one location to be visited by the vehicle.

The starting location may be a current location of the vehicle.

The method may further comprise detecting the current location of the vehicle.

The method may further comprise comparing an amount of electric power required for the planned route and the shortest route, and performing adjustment to the planned route based on the comparison.

The method may further comprise detecting current weather and performing adjustment to the planned route based on the detected current weather.

The method may further comprise predicting future weather and performing adjustment to the planned route based on the predicted weather.

In a second aspect, this specification describes an apparatus comprising means for performing a method according to the first aspect.

In a third aspect, this specification describes computer-readable instructions which, when executed by computer apparatus, cause the computer apparatus to perform a method according to the first aspect.

In a fourth aspect, this specification describes a computer-readable medium having computer-readable code stored thereon, the computer readable code, when executed by at least one processor, cause performance of at least: receiving at least one location to be visited by a vehicle; receiving information relating to an amount of solar radiation that can be received by the vehicle in a road network including a starting location and the received at least one location to be visited by the vehicle; analysing the received information; and selecting the planned route starting from the starting location and including the at least one location to be visited by the vehicle based on the analysis.

In a fifth aspect, this specification describes a system for determining a planned route for a vehicle, the system comprising: a receiving apparatus arranged to receive at least one location to be visited by the vehicle and information relating to an amount of solar radiation that can be received by the vehicle in a road network including a starting location and the received at least one location to be visited by the vehicle; and a control apparatus arranged to analyse the received information and select the planned route starting from the starting location and including the at least one location to be visited by the vehicle based on the analysis.

The receiving apparatus is arranged to receive a shortest route starting from the starting location and including the at least one location to be visited by the vehicle.

The control apparatus may be arranged to determine a shortest route starting from the starting location and including the at least one location to be visited by the vehicle.

The control apparatus may be arranged to compare an amount of electric power required for the planned route and the shortest route, and perform adjustment to the planned route based on the comparison.

The system may further comprise a sensor apparatus arranged to detect current weather, wherein the control apparatus is arranged to perform adjustment to the planned route based on the detected current weather.

The control apparatus may be arranged to predict future weather and perform adjustment to the planned route based on the predicted future weather.

### Brief Description of the Drawings

For a more complete understanding of the methods, apparatuses, and systems described herein, reference is now made to the following descriptions taken in connection with the accompanying drawings in which:
Figure 1 is a block diagram illustrating a system for determining a planned route for a vehicle, according to an exemplary embodiment;
Figure 2 is a flowchart schematically illustrating various functionalities which maybe provided by the system of Figure 1, according to another exemplary embodiment; and
Figure 3 is another flowchart schematically illustrating various functionalities which may be provided by the system of Figure 1, according to another exemplary embodiment.

### Detailed Description

Typically, route selection techniques are focussed on the reduction or minimisation of the distance travelled or the time spent travelling. Route selection techniques may take into consideration factors such as a number of turns in a given route, a number of intersections, speed limits, bridge crossings, etc. In the case of solar vehicles, in addition to improving the conversion efficiency of the solar powered vehicles, there is a need for maximising an amount of solar radiation received at these vehicles so as to ensure that sufficient energy can be provided to operate the vehicles.

Embodiments of the invention allows selection of a route starting from a desired starting location and including at least one location to be visited by the vehicle based on analysis of received information relating to an amount of solar radiation that can be received by the vehicle in a road network, which includes a starting location and the received at least one location to be visited by the vehicle. This route selection allows optimisation of the amount of solar radiation received by the vehicle during the route, which is beneficial for solar-powered vehicles (herein referred to as "solar vehicle"). Embodiments of the invention also improve energy efficiency of a vehicle by optimising the route starting from the starting location and including at least one location to be visited by the vehicle by for example taking into account weather and traffic information.

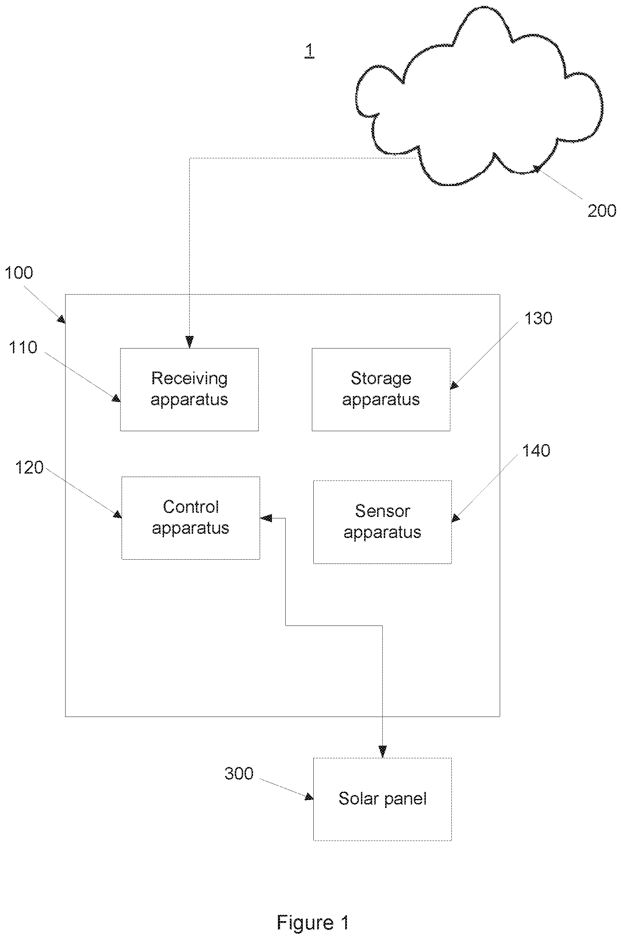

Figure 1 is a block diagram illustrating a system for determining a planned route for a vehicle, according to an exemplary embodiment.

As shown in Figure 1, the system 1 comprises a routing system 100 and a cloud network 200. The routing system 100 comprises a receiving apparatus 110, a control apparatus 120, a storage apparatus 130, and a sensor apparatus 140. Although not shown in Figure 1, the routing system 100 in this embodiment is a component of an electric solar vehicle including an electric motor apparatus. The cloud network 200 comprises a cloud storage apparatus, such as a remote server.

The electric solar vehicle also comprises a solar panel 300 which is mounted on an exterior of the vehicle and electrically connected to a power storage apparatus (not shown in the drawing) in the vehicle. The solar panel 300 is arranged to convert incident solar radiation into electricity for charging the power storage apparatus.

The receiving apparatus 110 is arranged to receive at least one location to be visited by the vehicle and information relating to an amount of solar radiation that can be received by the vehicle in a road network including a starting location and the received at least one location to be visited by the vehicle. In the present embodiment, the receiving apparatus 100 may also be arranged to receive the starting location, if the starting location is not received via an input apparatus. This will be explained in further detail below.

The information relating to an amount of solar radiation that can be received by the vehicle in a road network includes at least one of: sun location, time of day, topographic information, current weather information, and predicted future weather information. In this embodiment, the receiving apparatus 110 is arranged to receive the at least one location to be visited by the vehicle and information relating to an amount of solar radiation that can be received by the vehicle, in particular the solar panel 300 of the vehicle, in a road network from the cloud network 200.

The control apparatus 120 is arranged to analyse the received information relating to an amount of solar radiation that can be received by the vehicle and select a planned route starting from the starting location and including the at least one location to be visited by the vehicle based on the analysis. In the present embodiment, the planned route is selected such that that an optimal balance is achieved between an amount of solar radiation that can be received by the vehicle throughout the planned route and a distance of the planned route.

For example, the received information relating to an amount of solar radiation that can be received by the vehicle may include topographic information of an area including both the starting location and the at least one location to be visited by the vehicle. The topographic information may include height information of buildings in the area and the control apparatus can therefore select a planned route which avoids roads and streets along which high-rise buildings are located using the topographic information, such that the vehicle can receive more solar radiation along the planned route without having to substantially add to the distance to be travelled by the vehicle.

As mentioned, the starting location may be received via an input apparatus (not shown in the drawing) as an input by a user (e.g. a driver of the vehicle). However, if the starting location is not received at the input apparatus, this can be provided by the cloud network 200 to the receiving apparatus 110. Alternatively, a current location may be determined as the starting location by the control apparatus 120. In this embodiment, the control apparatus 120 comprises a Global Positioning System (GPS) navigator and therefore is arranged to receive and store GPS data, which may include ephemeris, almanac, and GPS time. Therefore, if no input of a starting location is received from a user at the input apparatus, the control apparatus 120 may determine a current location detected by the GPS navigator as the starting location.

In the present embodiment, during an operation of the vehicle when the vehicle is being driven along the planned route, the sensor apparatus 140 is arranged to detect at least one parameter that relates to a current weather. The detected parameter(s) may be stored in the storage apparatus 130. In the present embodiment, the sensor apparatus 140 comprises at least one of: a solar radiation detector, a barometer, a temperature sensor, and a humidity detector so as to detect at least one of: an amount of current solar radiation incident on the vehicle, the atmospheric pressure, a current temperature, and a measure of humidity.

The solar radiation detector may comprise at least one of: a pyrheliometer for measuring direct beam solar irradiance, a pyranometer for measuring solar irradiance on a planar surface, and a duration-of-sunshine instrument for measuring a fraction of daylight hours the sun is not obscured by clouds. The humidity detector may comprise a hygrometer for measuring moisture content in the atmosphere.

The control apparatus 120 is then arranged to detect a current weather based on data from the sensor apparatus 140. For example, since the sensor apparatus 140 is arranged to detect the atmospheric pressure and a measure of humidity, the control apparatus 120 can use these data as basis for determining a current weather, e.g. whether it is currently raining. The control apparatus 120 may then perform adjustment to the selected planned route based on the detected current weather. For example, if it is determined by the control apparatus 120 that it is currently raining, then the control apparatus 120 may adjust the planned route such that it no longer takes into account topography information that is received at the receiving apparatus 110.

The control apparatus 120 in the present embodiment is further arranged to predict future weather and perform adjustment to the planned route based on the predicted future weather. The control apparatus 120 may predict future weather on the basis of data detected by the sensor apparatus 140, e.g. solar radiation data, humidity data, atmospheric pressure data, etc. Similarly, the control apparatus 120 may then perform adjustment to the selected planned route based on the predicted future weather. For example, if it is determined by the control apparatus 120 that there is a high chance of rain in an hour and that the selected planned route will take approximately 2 hours, the control apparatus 120 may adjust the planned route such that a latter portion of the planned route no longer takes into account sun location information that is received at the receiving apparatus 110.

In the present embodiment, during an operation of the vehicle when the vehicle is being driven along the planned route, the control apparatus 120 is further arranged to record data including at least one of an amount of solar radiation received during a current planned route, a time of day, sun location, and weather information. The recorded data is stored at the storage apparatus 130, the cloud network 200 via a transmitting apparatus, or an external storage apparatus.

Once this data is recorded, the control apparatus 120 is arranged to optimise subsequent selection of planned route(s) based on the recorded data. For example, the control apparatus 120 may be arranged to optimise subsequent selection of a planned route by analysing the parameter(s) of the accumulated recorded data of a plurality of completed planned routes. Specifically, the control apparatus 120 may be arranged to perform pattern and/or trend recognition analysis on the accumulated recorded data and optimise subsequent selection based on the result of the pattern and/or trend recognition.

As an example, the amount of solar radiation received during a current planned route, planned route A, may be recorded and stored in the storage apparatus 130. Subsequently, if the same starting location and location(s) to be visited by the vehicle are received and/or determined at the routing system 100, the control apparatus 120 may be able to estimate an amount of solar radiation that will be received for planned route A based on the recorded data, and to compare the amount of solar radiation with an estimated amount of solar radiation that the vehicle may receive for other possible routes. The use of recorded data therefore increases the likelihood that a subsequent selection of a planned route is one that would optimise the amount of solar radiation received by the vehicle, since accuracy is improved on the basis of previous completed planned routes.

The recorded data may be transmitted via a transmitting apparatus (not shown in the drawing) to the cloud network 200 or an external server for sharing with air compression control systems or control systems of other vehicles that are connected to the cloud network 200.

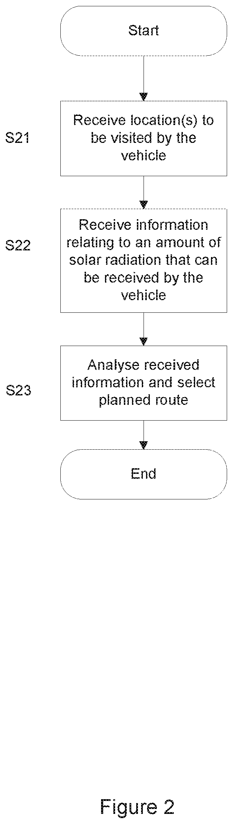

Figure 2 is a flowchart schematically illustrating various functionalities which may be provided by the system of Figure 1, according to another exemplary embodiment.

The process starts at step 21 and step 22. In the present embodiment, steps 21 and 22 are method steps that are performed by the routing system 100 concurrently. In steps 21 and 22, the routing system 100 receives at least one location to be visited by the vehicle and information relating to an amount of the solar radiation that can be received by the vehicle in a road network including a starting location and the at least one location to be visited by the vehicle. The information relating to an amount of the solar radiation that can be received by the vehicle includes at least one of: sun location, time of day, topographic information, current weather information, and predicted future weather information.

The starting location may be received via an input apparatus as an input by a user (e.g. a driver of the vehicle). However, if the starting location is not received at the input apparatus, this can be provided by the cloud network 200 to the receiving apparatus 110. Alternatively, a current location may be determined as the starting location by the control apparatus 120. In this embodiment, the control apparatus 120 comprises a Global Positioning System (GPS) navigator and therefore is arranged to receive and store GPS data, which may include ephemeris, almanac, and GPS time. Therefore, if no input of a starting location is received from a user at the input apparatus, the control apparatus 120 may determine a current location detected by the GPS navigator as the starting location.

In the subsequent step 23, the control apparatus 120 analyses the information received in step 22 and selects a planned route starting from the starting location and including the at least one location to be visited by the vehicle received in step 21. In the present embodiment, the planned route is selected such that that an optimal balance is achieved between an amount of solar radiation that can be received by the vehicle throughout the planned route and a distance of the planned route.

For example, the received information relating to an amount of solar radiation that can be received by the vehicle may include sun location information, time of day information, and topographic information. The control apparatus 120 may therefore be able to estimate, based on the sun location, time of day, and topographic information, an amount of solar radiation that a vehicle can receive along each of the roads and streets in a road network that includes the starting location and the at least one location to be visited by the vehicle. On the basis of this estimation, the control apparatus 120 may be able to select a combination of roads and/or streets starting from the starting location and including the at least one location to be visited by the vehicle which would allow the solar panel 300 of the vehicle to receive an optimal amount of solar radiation.

If desired, the different steps discussed herein may be performed in a different order and/or concurrently with each other. Furthermore, if desired, one or more above-described steps may be optional or may be combined.

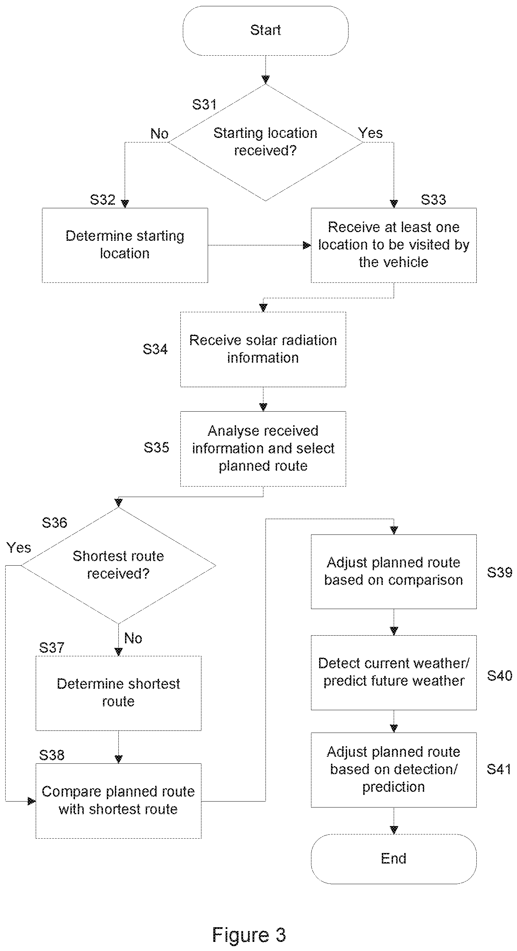

Figure 3 is another flowchart schematically illustrating various functionalities which may be provided by the system of Figure 1, according to another exemplary embodiment.

The process starts at step 31. In step 31, the routing system 100 determines whether a starting location is received. Specifically, the control apparatus 120 of the routing system 100 determines whether a starting location is received at the receiving apparatus 110. The starting location may be received from a cloud network 200 or another remote server that is connected to the system 100.

If it is determined in step 31 that a starting location is received, the method proceeds to step 33, where at least one location to be visited by a vehicle is received. If it is determined in step 31 that a starting location is not received, the method proceeds to step 32, where a starting location is determined.

In step 32, after it is determined that starting location is not received, the control apparatus 120 of the routing system 100 determines a starting location. In this embodiment, the control apparatus 120 comprises a GPS navigator which detects a current location. The control apparatus 120 sets the detected location as the starting location. After step 32, the method proceeds to step 33 where at least one location to be visited by the vehicle is received.

By introducing a step of determining whether a starting location is received, the routing system 100 is able to obtain a starting location from a plurality of different sources, i.e. from the cloud network (or another remote server) or by setting a current location as the starting location. Therefore, flexibility and usability of the routing system 100 is increased.

In the subsequent step 33, after a starting location is obtained either by receiving it from the cloud network 200 or detecting a current location, the routing system 100 receives at least one location to be visited by the vehicle at the receiving apparatus 110. In this embodiment, the at least one location to be visited by the vehicle is received from the cloud network 200.

After receiving the at least one location to be visited by the vehicle in step 33, the receiving apparatus 110 also receives information relating to an amount of solar radiation that can be received by the vehicle in a road network including the starting location and the received at least one location to be visited by the vehicle in step 34. The information relating to an amount of solar radiation that can be received by the vehicle includes at least one of: sun location, time of day, topographic information, current weather information, and predicted future weather information.

In the next step 35, the control apparatus 120 of the routing system 100 analyses the information received in step 34 and selects a planned route starting from the starting location and including the at least one location to be visited by the vehicle received in step 33. In the present embodiment, the planned route is selected such that that an optimal balance is acheived between an amount of solar radiation that can be received by the vehicle throughout the planned route and a distance of the planned route.

For example, the received information relating to an amount of solar radiation that can be received by the vehicle may include sun location information, time of day information, and topographic information. The control apparatus 120 may therefore be able to estimate, based on the sun location, time of day, and topographic information, an amount of solar radiation that a vehicle can receive along each of the roads and streets in a road network that includes the starting location and the at least one location to be visited by the vehicle. On the basis of this estimation, the control apparatus 120 may be able to select a combination of roads and/or streets starting from the starting location and including the at least one location to be visited by the vehicle which would allow the solar panel 300 of the vehicle to receive an optimal amount of solar radiation.

Subsequently, in the next step 36, it is determined whether a shortest route starting from the starting location and including the at least one location to be visited by the vehicle is received. The shortest route may be received at the receiving apparatus 110 from the cloud network 200 or from another remote server.

If it is determined in step 36 that a shortest route is received at the routing system 100, the method proceeds to step 38, where the planned route is compared against the shortest route. If it is determined that a shortest route is not received at the routing system 100, the method proceeds to step 37 where a shortest route is determined.

In step 37, the control apparatus 120 determines a shortest route starting from the starting location including the at least one location to be visited by the vehicle. The GPS navigator of the control apparatus 120 is capable of performing this determination by searching a plurality of routes connecting the starting location and the at least one location to be visited by the vehicle.

In the next steps 38 and 39, the planned route is compared against the shortest route by the control apparatus 120 and the planned route is then adjusted based on the comparison. Specifically, an amount of electric power required for the planned route and an amount of electric power required for the shortest route are compared. In this step, the control apparatus 120 may be arranged to estimate an amount of electric power required for the planned route and an amount of electric power required for the shortest route, and to calculate a difference between the estimated required electric power. If the difference between the amounts of required electric power of the planned route and the shortest route exceeds a predetermined threshold, the control apparatus 120 performs adjustment to the planned route so as to reduce the amount of electric power required for the planned route, e.g. shortening the route by redirecting.

In the next step 40, the control apparatus 120 performs at least one of detecting a current weather and predicting future weather. In this step, the sensor apparatus 140 detects at least one parameter that relates to a current weather. In the present embodiment, the sensor apparatus 140 comprises at least one of: a solar radiation detector, a barometer, a temperature sensor, and a humidity detector so as to detect an amount of current solar radiation incident on the vehicle, the atmospheric pressure, a current temperature, and a measure of humidity. The solar radiation detector may comprise at least one of: a pyrheliometer for measuring direct beam solar irradiance, a pyranometer for measuring solar irradiance on a planar surface, and a duration-of-sunshine instrument for measuring a fraction of daylight hours the sun is not obscured by clouds. The humidity detector may comprise a hygrometer for measuring a moisture content in the atmosphere.

The control apparatus 120 detects current weather based on data from the sensor apparatus 140 and/or predicts future weather based on data from the sensor apparatus 140. For example, since the sensor apparatus 140 is arranged to detect solar radiation, the control apparatus 120 can use this data as basis for determining a current weather, e.g. if the solar radiation received per unit time is higher than a threshold, determining that it is currently sunny.

After the control apparatus 120 detects current weather and/or predicts future weather, in step 41 the control apparatus 120 performs adjustment to the selected planned route based on the detection and/or prediction. For example, if it is determined by the control apparatus 120 that it is currently raining, then the control apparatus 120 may adjust the planned route such that it no longer takes into account topography information that is received at the receiving apparatus 110.

In the present embodiment, steps 40 and 41 occur during an operation of the vehicle when the vehicle is being driven along the planned route. In other words, the routing system 100 in this embodiment constantly performs analysis of whether the planned route allows the vehicle to receive an optimal amount of sunlight, taking into account of a plurality of factors such as real-time weather.

If desired, the different steps discussed herein may be performed in a different order and/or concurrently with each other. Furthermore, if desired, one or more above-described steps may be optional or may be combined. For example, step 32 described above may be replaced by a step of receiving an input of a starting location from a user. As another example, steps 40 and 41 may be omitted from the method above in order to reduce the amount of electric power used for performing the detection/prediction of weather and further adjustment of the planned route.

In alternative embodiments, more than one solar panel may be provided at the vehicle, the more than one solar panels being electrically connected to the power storage apparatus of the vehicle. In these alternative embodiments, the more than one solar panels may be arranged as an array in a strategic location on an exterior of the vehicle.

In alternative embodiments, the routing system may not comprise a sensor apparatus. In these alternative embodiments, the control apparatus may be arranged to perform adjustment to the planned route based on information received at the receiving apparatus, e.g. a current weather received from the cloud network.

In alternative embodiments, the user may not be a driver of the vehicle. For example, in the case where the vehicle is a self-driving vehicle, the user may be a passenger of the vehicle.

In alternative embodiments, the receiving apparatus may not be arranged to receive the at least one location to be visited by the vehicle or information relating to an amount of solar radiation that can be received by the vehicle from the cloud network. In these alternative embodiments the receiving apparatus maybe arranged to receive the at least one location to be visited by the vehicle or information relating to an amount of solar radiation that can be received by the vehicle from a separate remote server.

In alternative embodiments, the routing system may further comprise an input apparatus for receiving an input of at least one location to be visited by the vehicle from a user. In these alternative embodiments, the routing system may not be arranged to receive location(s) to be visited by the vehicle from a cloud network or other remote servers. In addition, in these alternative embodiments, the input apparatus may comprise a keyboard and/or a touch-screen input for the user to enter a post code or an address or select among a plurality of saved/stored locations.

In alternative embodiments, the sensor apparatus may comprise any other type of detecting or sensing instrument which relates to a current weather. For example, in alternative embodiments, the sensor apparatus may comprise a lightning detector, a rain gauge, and an anemometer, etc.

Although it is described in an embodiment above that the routing system is arranged to receive at least one location to be visited by the vehicle at the receiving apparatus, in alternative embodiments the routing system is arranged to receive an input of at least one location to be visited by the vehicle from a user via an input apparatus in the routing system.

In alternative embodiments, the receiving apparatus may be further arranged to receive real-time traffic information and/or general traffic information. Both real-time traffic information and general traffic information may include information relating to traffic lights, disruptions, congestion, or whether at least a part of the planned route is motorway. In these alternative embodiments, the control apparatus may be arranged to perform adjustment to the planned route based on the received real-time traffic information and/or general traffic information. For example, the control apparatus may determine that a part of the planned route should be redirected due to congestion in that part of the planned route.

In alternative embodiments, the control apparatus may not be arranged to perform adjustment to the selected planned route during an operation of the vehicle, i.e. when the vehicle is being driven.

Although it is described in an embodiment above that adjustment to the planned route is performed during an operation of the vehicle, in alternative embodiments, adjustment to the planned route maybe performed before commencement of the planned route.

Although it is described in an embodiment above that the routing system is part of a vehicle, in alternative embodiments, the routing system may not be located or implemented in the vehicle. For example, in an alternative embodiment, the routing system may be implemented in the cloud network of the system. In addition, in alternative embodiments, other components of the routing system maybe omitted or implemented in other parts of the vehicle when the routing system is located or implemented outside the vehicle. For example, when the routing system is implemented in the cloud network of the system, the sensor apparatus may be located in the vehicle rather than being implemented in the cloud network.

Embodiments of the present invention may be implemented in software, hardware, application logic or a combination of software, hardware, and application logic. The software, application logic and/or hardware may reside on memory, or any computer media. In an exemplary embodiment, the application software or an instruction set is maintained on any one of various conventional computer-readable media. In the context of this document, a "memory" or "computer-readable medium" maybe any media or means that can contain, store, communicate, propagate or transport the instructions for use by or in connection with an instruction executing system, apparatus, or device, such as a computer.

It is also noted herein that while the above describes various examples, these descriptions should not be viewed in a limiting sense. Rather, there are several variations and modifications which may be made without departing from the scope of the present invention as defined in the appended claims.

## Claims

1. A computer-implemented method for selecting a planned route for a vehicle, the method comprising:
receiving (S21, S33) at least one location to be visited by the vehicle;
receiving (S22, S34) information relating to an amount of solar radiation that can be received by the vehicle in a road network including a starting location and the received at least one location to be visited by the vehicle;
analysing (S23, S35) the received information to determine the amount of solar radiation that can be received by the vehicle in the road network;
identifying (S35) a planned route starting from the starting location and including the at least one location to be visited by the vehicle based on the analysis;
identifying (S36, S37) a shortest route starting from the starting location and including the at least one location to be visited by the vehicle; **characterised by**
comparing (S38) the planned route against the shortest route by comparing an amount of electrical power required to navigate the vehicle along the planned route with an amount of electrical power required to navigate the vehicle along the shortest route; and
automatically adjusting (S39) the planned route based on the comparison of the planned route and the shortest route.

2. The method according to claim 1, wherein comparing the planned route against the shortest route comprises:
based on the comparison between the amount of electrical power required to navigate the vehicle along the planned route and the amount of electrical power required to navigate the vehicle along the shortest route, deriving a difference between the amount of electrical power required to navigate the vehicle along the planned route and the amount of electrical power required to navigate the vehicle along the shortest route; and
comparing the difference to a predetermined threshold value,
optionally wherein adjusting the planned route based on the comparison of the planned route and the shortest route comprises:
determining that the difference between the amount of electrical power required to navigate the vehicle along the planned route and the amount of electrical power required to navigate the vehicle along the shortest route is greater than the threshold value; and
in response to said determination, adjusting the planned route in order to reduce the amount of electrical power required to navigate the vehicle between the starting location and the received at least one location to be visited by the vehicle.

3. The method of any preceding claim, wherein at least one of:
adjusting the planned route based on the comparison of the planned route and the shortest route comprises shortening the total distance of the planned route; or
the received information relating to an amount of solar radiation that can be received by the vehicle comprises at least one of: sun location, time of day, topographic information, current weather information, and predicted future weather information.

4. The method according to any preceding claim, further comprising:
receiving the shortest route starting from the starting location and including the at least one location to be visited by the vehicle; or
determining the shortest route starting from the starting location and including the at least one location to be visited by the vehicle.

5. The method according to any of the preceding claims, wherein the starting location is a current location of the vehicle, the method optionally further comprising detecting the current location of the vehicle.

6. The method according to any of the preceding claims, further comprising at least one of:
detecting (S40) current weather and performing adjustment (S41) to the planned route based on the detected current weather;
predicting future weather and performing adjustment to the planned route based on the predicted weather; or
automatically navigating a driverless vehicle along the planned route.

7. The method of any preceding claim, wherein the vehicle is a driverless vehicle configured to:
receive the planned route; and
automatically navigate along the planned route by moving between the starting location and the at least one location to be visited by the vehicle,
optionally wherein adjusting the planned route based on the comparison of the planned route and the shortest route comprises:
adjusting a set of computer-readable driving instructions, defining the planned route, for the driverless vehicle.

8. Apparatus comprising means for performing a method according to any preceding claim.

9. Computer-readable instructions which, when executed by a computer apparatus, cause the computer apparatus to perform a method according to any of claims 1 to 7.

10. A computer-readable medium having computer-readable code stored thereon, the computer readable code, when executed by at least one processor, causing performance of the method of any of claims 1 to 7.

11. A system (100) for determining a planned route for a vehicle, the system comprising:
a receiving apparatus (110) arranged to receive at least one location to be visited by the vehicle (S21, S33) and information relating to an amount of solar radiation that can be received by the vehicle (S22, S34) in a road network including a starting location and the received at least one location to be visited by the vehicle; and
a control apparatus (120) arranged to:
analyse (S23, S35) the received information to determine the amount of solar radiation that can be received by the vehicle in the road network;
identify the planned route starting from the starting location and including the at least one location to be visited by the vehicle based on the analysis;
identify (S37) a shortest route starting from the starting location and including the at least one location to be visited by the vehicle;
**characterised in that** the control apparatus is further arranged to:
compare (S38) the planned route against the shortest route by comparing an amount of electrical power required to navigate the vehicle along the planned route with an amount of electrical power required to navigate the vehicle along the shortest route; and
automatically adjust (S39) the planned route based on the comparison of the planned route and the shortest route.

12. The system of claim 11, wherein the control apparatus is configured to compare the planned route against the shortest route by performing actions comprising:
based on the comparison between the amount of electrical power required to navigate the vehicle along the planned route and the amount of electrical power required to navigate the vehicle along the shortest route, deriving a difference between the amount of electrical power required to navigate the vehicle along the planned route and the amount of electrical power required to navigate the vehicle along the shortest route; and
comparing the difference to a predetermined threshold value,
optionally wherein the control apparatus is configured to adjust the planned route based on the comparison of the planned route and the shortest route by performing actions comprising:
determining that the difference between the amount of electrical power required to navigate the vehicle along the planned route and the amount of electrical power required to navigate the vehicle along the shortest route is greater than the threshold value; and
in response to said determination, adjusting the planned route in order to reduce the amount of electrical power required to navigate the vehicle between the starting location and the received at least one location to be visited by the vehicle.

13. The system of any of claims 11 to 12, wherein the control apparatus is configured to adjust the planned route based on the comparison of the planned route and the shortest route by performing actions comprising:
shortening the total distance of the planned route.

14. The system according to any of claims 11 to 13, wherein:
the receiving apparatus is arranged to receive the shortest route starting from the starting location and including the at least one location to be visited by the vehicle; or
the control apparatus is arranged to determine the shortest route starting from the starting location and including the at least one location to be visited by the vehicle.

15. The system according to any one of claims 11 to 14, wherein at least one of:
the system further comprises a sensor apparatus arranged to detect current weather, wherein the control apparatus is arranged to perform adjustment to the planned route based on the detected current weather; or
the control apparatus is arranged to predict future weather and perform adjustment to the planned route based on the predicted future weather.

## Patentansprüche

1. Computerimplementiertes Verfahren zum Auswählen einer geplanten Route für ein Fahrzeug, wobei das Verfahren Folgendes umfasst:
Empfangen (S21, S33), mindestens eines Ortes, der von dem Fahrzeug zu besuchen ist,
Empfangen (S22, S34) von Informationen bezüglich einer Menge an Sonnenstrahlung, die von dem Fahrzeug in einem Straßennetz empfangen werden kann, einschließlich eines Ausgangsortes und des empfangenen mindestens einen Ortes, der von dem Fahrzeug zu besuchen ist,
Analysieren (S23, S35) der empfangenen Informationen zum Bestimmen der Menge an Sonnenstrahlung, die von dem Fahrzeug in dem Straßennetz empfangen werden kann,
Identifizieren (S35) einer geplanten Route ausgehend von dem Ausgangsort und einschließlich des mindestens einen Ortes, der von dem Fahrzeug zu besuchen ist, basierend auf der Analyse,
Identifizieren (S36, S37) einer kürzesten Route, ausgehend von dem Ausgangsort und einschließlich des mindestens einen Ortes, der von dem Fahrzeug zu besuchen ist,
**gekennzeichnet durch**
Vergleichen (S38) der geplanten Route mit der kürzesten Route durch Vergleichen einer Menge an Elektroenergie, die erforderlich ist, um das Fahrzeug über die geplante Route zu steuern, mit einer Menge an Elektroenergie, die erforderlich ist, das Fahrzeug über die kürzeste Route zu steuern, und
automatisches Justieren (S39) der geplanten Route, basierend auf dem Vergleich der geplanten Route und der kürzesten Route.

2. Verfahren nach Anspruch 1, wobei das Vergleichen der geplanten Route mit der kürzesten Route Folgendes umfasst:
basierend auf dem Vergleich zwischen der Menge an Elektroenergie, die erforderlich ist, um das Fahrzeug über die geplante Route zu steuern, und der Menge an Elektroenergie, die erforderlich ist, um das Fahrzeug über die kürzeste Route zu steuern, Ableiten einer Differenz zwischen der Menge an Elektroenergie, die erforderlich ist, um das Fahrzeug über die geplante Route zu steuern, und der Menge an Elektroenergie, die erforderlich ist, um das Fahrzeug über die kürzeste Route zu steuern, und
Vergleichen der Differenz mit einem festgelegten Grenzwert,
wobei das Justieren der geplanten Route, basierend auf dem Vergleich der geplanten Route mit der kürzesten Route, optional Folgendes umfasst:
Bestimmen, dass die Differenz zwischen der Menge an Elektroenergie, die erforderlich ist, um das Fahrzeug über die geplante Route zu steuern, und der Menge an Elektroenergie, die erforderlich ist, um das Fahrzeug über die kürzeste Route zu steuern, größer ist als der Grenzwert, und
in Reaktion auf die Bestimmung Justieren der geplanten Route, um die Menge an Elektroenergie zu reduzieren, die erforderlich ist, um das Fahrzeug zwischen dem Ausgangsort und dem empfangenen mindestens einen Ort, der von dem Fahrzeug zu besuchen ist, zu steuern.

3. Verfahren nach einem vorhergehenden Anspruch, wobei mindestens eines des Folgenden:
das Justieren der geplanten Route basierend auf dem Vergleich der geplanten Route und der kürzesten Route das Verkürzen der Gesamtentfernung der geplanten Route umfasst, oder
die empfangenen Informationen bezüglich einer Menge an Sonnenstrahlung, die von dem Fahrzeug empfangen werden kann, mindestens eines des Folgenden umfassen: Sonnenposition, Tageszeit, Topografieinformationen, aktuelle Wetterinformationen und Wettervorhersageinformationen.

4. Verfahren nach einem vorhergehenden Anspruch, ferner Folgendes umfassend:
Empfangen der kürzesten Route, ausgehend vom Ausgangsort und einschließlich des mindestens einen Ortes, der von dem Fahrzeug zu besuchen ist, oder
Bestimmen der kürzesten Route, ausgehend von Ausgangsort und einschließlich des mindestens einen Ortes, der von dem Fahrzeug zu besuchen ist.

5. Verfahren nach einem der vorhergehenden Ansprüche, wobei der Ausgangsort ein aktueller Standort des Fahrzeugs ist, wobei das Verfahren optional ferner das Erkennen des aktuellen Standortes des Fahrzeugs umfasst.

6. Verfahren nach einem der vorhergehenden Ansprüche, ferner mindestens eines des Folgenden umfassend:
Erkennen (S40) des aktuellen Wetters und Durchführen einer Justierung (S41) an der geplanten Route basierend auf dem erkannten aktuellen Wetter,
Vorhersagen zukünftigen Wetters und Durchführen einer Justierung an der geplanten Route basierend auf dem vorhergesagten Wetter oder
automatisches Steuern eines fahrerlosen Fahrzeugs über die geplante Route.

7. Verfahren nach einem vorhergehenden Anspruch, wobei das Fahrzeug ein fahrerloses Fahrzeug ist, das für Folgendes konfiguriert ist:
Empfangen der geplanten Route und
automatisches Steuern über die geplante Route durch Bewegen zwischen dem Ausgangsort und dem mindestens einen Ort, der von dem Fahrzeug zu besuchen ist,
optional wobei das justieren der geplanten Route basierend auf dem Vergleich der geplanten Route und der kürzesten Route Folgendes umfasst:
Justieren eines Satzes computerlesbarer Fahranweisungen, welche die geplante Route definieren, für das fahrerlose Fahrzeug.

8. Vorrichtung, Mittel zum Durchführen eines Verfahrens nach einem vorhergehenden Anspruch umfassend.

9. Computerlesbare Anweisungen, die bei Ausführung durch eine Computervorrichtung die Computervorrichtung veranlassen, ein Verfahren nach einem der Ansprüche 1 bis 7 durchzuführen.

10. Computerlesbares Medium, auf dem computerlesbarer Code gespeichert ist, wobei der computerlesbare Code bei Ausführung durch mindestens einen Prozessor die Ausführung des Verfahrens nach einem der Ansprüche 1 bis 7 veranlasst.

11. System (100) zum Bestimmen einer geplanten Route für ein Fahrzeugt, wobei das System Folgendes umfasst:
eine Empfangsvorrichtung (110), die dafür angeordnet ist, mindestens einen Ort, der von dem Fahrzeug zu besuchen ist, und Informationen bezüglich einer Menge an Sonnenstrahlung, die von dem Fahrzeug in einem Straßennetz empfangen werden kann (S22, S34), einschließlich eines Ausgangsortes und des empfangenen mindestens einen Ortes, der von dem Fahrzeug zu besuchen ist, zu empfangen (S21, S33), und
eine Steuervorrichtung (120), die für Folgendes angeordnet ist:
Analysieren (S23, S35) der empfangenen Informationen zum Bestimmen der Menge an Sonnenstrahlung, die von dem Fahrzeug in dem Straßennetz empfangen werden kann,
Identifizieren (S35) einer geplanten Route ausgehend von dem Ausgangsort und einschließlich des mindestens einen Ortes, der von dem Fahrzeug zu besuchen ist, basierend auf der Analyse,
Identifizieren (S37) der kürzesten Route, ausgehend von dem Ausgangsort und einschließlich des mindestens einen Ortes, der von dem Fahrzeug zu besuchen ist,
**dadurch gekennzeichnet, dass** die Steuervorrichtung ferner für Folgendes angeordnet ist:
Vergleichen (S38) der geplanten Route mit der kürzesten Route durch Vergleichen einer Menge an Elektroenergie, die erforderlich ist, um das Fahrzeug über die geplante Route zu steuern, mit einer Menge an Elektroenergie, die erforderlich ist, um das Fahrzeug über die kürzeste Route zu steuern, und
automatisches Justieren (S39) der geplanten Route basierend auf dem Vergleich der geplanten Route und der kürzesten Route.

12. System nach Anspruch 11, wobei die Steuervorrichtung dafür konfiguriert ist, die geplante Route mit der kürzesten Route durch Durchführen von Aktionen zu vergleichen, die Folgendes umfassen:
basierend auf dem Vergleich zwischen der Menge an Elektroenergie, die erforderlich ist, um das Fahrzeug über die geplante Route zu steuern, und der Menge an Elektroenergie, die erforderlich ist, um das Fahrzeug über die kürzeste Route zu steuern, Ableiten einer Differenz zwischen der Menge an Elektroenergie, die erforderlich ist, um das Fahrzeug über die geplante Route zu steuern und der Menge an Elektroenergie, die erforderlich ist, um das Fahrzeug über die kürzeste Route zu steuern, und
Vergleichen der Differenz mit einem festgelegten Grenzwert,
optional wobei die Steuervorrichtung dafür konfiguriert ist, die geplante Route basierend auf dem Vergleich der geplanten Route mit der kürzesten Route durch Durchführen von Aktionen zu justieren, die Folgendes umfassen:
Bestimmen, dass die Differenz zwischen der Menge an Elektroenergie, die erforderlich ist, um das Fahrzeug über die geplante Route zu steuern und der Menge an Elektroenergie, die erforderlich ist, um das Fahrzeug über die kürzeste Route zu steuern, größer ist als der Grenzwert, und
in Reaktion auf die Bestimmung Justieren der geplanten Route, um die Menge an Elektroenergie zu reduzieren, die erforderlich ist, um das Fahrzeug zwischen dem Ausgangsort und dem empfangenen mindestens einen Ort, der von dem Fahrzeug zu besuchen ist, zu steuern.

13. System nach einem der Ansprüche 11 bis 12, wobei die Steuervorrichtung dafür konfiguriert ist, die geplante Route basierend auf dem Vergleich der geplanten Route und der kürzesten Route durch Durchführen von Aktionen zu justieren, die Folgendes umfassen:
Verkürzen der Gesamtentfernung der geplanten Route.

14. System nach einem der Ansprüche 11 bis 13, wobei:
die Steuervorrichtung dafür angeordnet ist, die kürzeste Route ausgehend vom Ausgangsort und einschließlich des mindestens einen Ortes, der von dem Fahrzeug zu besuchen ist, zu empfangen, oder
die Steuervorrichtung dafür angeordnet ist, die kürzeste Route ausgehend vom Ausgangsort und einschließlich des mindestens einen Ortes, der von dem Fahrzeug zu besuchen ist, zu bestimmen.

15. System nach einem der Ansprüche 11 bis 14, wobei mindestens eines des Folgenden:
das System ferner eine Sensorvorrichtung umfasst, die dafür angeordnet ist, das aktuelle Wetter zu erkennen, wobei die Steuervorrichtung dafür angeordnet ist, eine Justierung an der geplanten Route basierend auf dem erkannten aktuellen Wetter durchzuführen, oder
die Steuervorrichtung dafür angeordnet ist, zukünftiges Wetter vorherzusagen und eine Justierung an der geplanten Route basierend auf dem vorhergesagten zukünftigen Wetter durchzuführen.

## Revendications

1. Procédé mis en œuvre par ordinateur pour sélectionner un itinéraire planifié pour un véhicule, le procédé comprenant :
la réception (S21, S33) d'au moins un emplacement devant être visité par le véhicule ;
la réception (S22, S34) d'informations concernant une quantité de rayonnement solaire pouvant être reçue par le véhicule dans un réseau routier comportant un emplacement de départ et l'au moins un emplacement reçu devant être visité par le véhicule ;
l'analyse (S23, S35) des informations reçues pour déterminer la quantité de rayonnement solaire pouvant être reçue par le véhicule dans le réseau routier ;
l'identification (S35) d'un itinéraire planifié commençant à l'emplacement de départ et comportant l'au moins un emplacement devant être visité par le véhicule sur la base de l'analyse ;
l'identification (S36, S37) de l'itinéraire le plus court commençant à l'emplacement de départ et comportant l'au moins un emplacement devant être visité par le véhicule ; **caractérisé par**
la comparaison (S38) de l'itinéraire planifié à l'itinéraire le plus court en comparant une quantité de puissance électrique requise pour faire naviguer le véhicule le long de l'itinéraire planifié à une quantité de puissance électrique requise pour faire naviguer le véhicule le long de l'itinéraire le plus court ; et
l'ajustement automatique (S39) de l'itinéraire planifié sur la base de la comparaison de l'itinéraire planifié et de l'itinéraire le plus court.

2. Procédé selon la revendication 1, dans lequel la comparaison de l'itinéraire planifié à l'itinéraire le plus court comprend :
sur la base de la comparaison entre la quantité de puissance électrique requise pour faire naviguer le véhicule le long de l'itinéraire planifié et la quantité d'énergie électrique requise pour faire naviguer le véhicule le long de l'itinéraire le plus court, la dérivation d'une différence entre la quantité de puissance électrique requise pour faire naviguer le véhicule le long de l'itinéraire planifié et la quantité de puissance électrique requise pour faire naviguer le véhicule le long de l'itinéraire le plus court ; et
la comparaison de la différence à une valeur limite prédéterminée,
facultativement dans lequel l'ajustement de l'itinéraire planifié sur la base de la comparaison de l'itinéraire planifié et de l'itinéraire le plus court comprend :
la détermination que la différence entre la quantité de puissance électrique requise pour faire naviguer le véhicule le long de l'itinéraire planifié et la quantité de puissance électrique requise pour faire naviguer le véhicule le long de l'itinéraire le plus court est supérieure à la valeur limite ; et
en réponse à ladite détermination, l'ajustement de l'itinéraire planifié afin de réduire la quantité de puissance électrique requise pour faire naviguer le véhicule entre l'emplacement de départ et l'au moins un emplacement reçu devant être visité par le véhicule.

3. Procédé selon n'importe quelle revendication précédente, dans lequel au moins :
l'ajustement de l'itinéraire planifié sur la base de la comparaison de l'itinéraire planifié et de l'itinéraire le plus court comprend la réduction de la distance totale de l'itinéraire planifié ; ou
les informations reçues concernant une quantité de rayonnement solaire pouvant être reçue par le véhicule comprennent au moins une : d'une position du soleil, d'une heure de la journée, d'informations topographiques, d'informations météorologiques actuelles, et d'informations météorologiques futures prédites.

4. Procédé selon n'importe quelle revendication précédente, comprenant en outre :
la réception de l'itinéraire le plus court commençant à l'emplacement de départ et comportant l'au moins un emplacement devant être visité par le véhicule ; ou
la détermination de l'itinéraire le plus court commençant à l'emplacement de départ et comportant l'au moins un emplacement devant être visité par le véhicule.

5. Procédé selon l'une quelconque des revendications précédentes, dans lequel l'emplacement de départ est un emplacement actuel du véhicule, le procédé comprenant en outre facultativement la détection de l'emplacement actuel du véhicule.

6. Procédé selon l'une quelconque des revendications précédentes, comprenant en outre au moins :
la détection (S40) de conditions météorologiques actuelles et la réalisation d'un ajustement (S41) de l'itinéraire planifié en fonction des conditions météorologiques détectées ;
la prédiction des conditions météorologiques futures et la réalisation d'un ajustement de l'itinéraire planifié sur la base des conditions météorologiques prédites ; ou
la navigation automatique d'un véhicule non piloté le long de l'itinéraire planifié.

7. Procédé selon n'importe quelle revendication précédente, dans lequel le véhicule est un véhicule non piloté configuré pour :
recevoir l'itinéraire planifié ; et
naviguer automatiquement le long de l'itinéraire planifié en se déplaçant entre l'emplacement de départ et l'au moins un emplacement devant être visité par le véhicule,
facultativement dans lequel l'ajustement de l'itinéraire planifié sur la base de la comparaison de l'itinéraire planifié et de l'itinéraire le plus court comprend :
l'ajustement d'un ensemble d'instructions de conduite lisibles par ordinateur, définissant l'itinéraire planifié, du véhicule non piloté.

8. Appareil comprenant des moyens pour réaliser un procédé selon n'importe quelle revendication précédente.

9. Instructions lisibles par ordinateur qui, à leur exécution par un appareil informatique, amènent l'appareil informatique à réaliser un procédé selon l'une quelconque des revendications 1 à 7.

10. Support lisible par ordinateur sur lequel est mémorisé un code lisible par ordinateur, le code lisible par ordinateur, à son exécution par au moins un processeur, entraînant la réalisation du procédé selon l'une quelconque des revendications 1 à 7.

11. Système (100) de détermination d'un itinéraire planifié pour un véhicule, le système comprenant :
un appareil de réception (110) agencé pour recevoir au moins un emplacement devant être visité par le véhicule (S21, S33) et des informations concernant une quantité de rayonnement solaire pouvant être reçue par le véhicule (S22, S34) dans un réseau routier comportant un emplacement de départ et l'au moins un emplacement reçu devant être visité par le véhicule ; et
un appareil de commande (120) agencé pour :
analyser (S23, S35) les informations reçues pour déterminer la quantité de rayonnement solaire pouvant être reçue par le véhicule dans le réseau routier ;
identifier (s35) l'itinéraire planifié commençant à l'emplacement de départ et comportant l'au moins un emplacement devant être visité par le véhicule sur la base de l'analyse ;
identifier (S37) l'itinéraire le plus court commençant à l'emplacement de départ et comportant l'au moins un emplacement devant être visité par le véhicule ;
**caractérisé en ce que** l'appareil de commande est agencé en outre pour :
comparer (S38) l'itinéraire planifié à l'itinéraire le plus court en comparant une quantité de puissance électrique requise pour faire naviguer le véhicule le long de l'itinéraire planifié à une quantité de puissance électrique requise pour faire naviguer le véhicule le long de l'itinéraire le plus court ; et
ajuster automatiquement (S39) l'itinéraire planifié sur la base de la comparaison de l'itinéraire planifié et de l'itinéraire le plus court.

12. Système selon la revendication 11, dans lequel l'appareil de commande est configuré pour comparer l'itinéraire planifié à l'itinéraire le plus court en réalisant des actions comprenant :
sur la base de la comparaison entre la quantité de puissance électrique requise pour faire naviguer le véhicule le long de l'itinéraire planifié et la quantité d'énergie électrique requise pour faire naviguer le véhicule le long de l'itinéraire le plus court, la dérivation d'une différence entre la quantité de puissance électrique requise pour faire naviguer le véhicule le long de l'itinéraire planifié et la quantité de puissance électrique requise pour faire naviguer le véhicule le long de l'itinéraire le plus court ; et
la comparaison de la différence à une valeur limite prédéterminée,
facultativement dans lequel l'appareil de commander est configuré pour ajuster l'itinéraire planifié sur la base de la comparaison de l'itinéraire planifié et de l'itinéraire le plus court comprenant :
la détermination que la différence entre la quantité de puissance électrique requise pour faire naviguer le véhicule le long de l'itinéraire planifié et la quantité de puissance électrique requise pour faire naviguer le véhicule le long de l'itinéraire le plus court est supérieure à la valeur limite ; et
en réponse à ladite détermination, l'ajustement de l'itinéraire planifié afin de réduire la quantité de puissance électrique requise pour faire naviguer le véhicule entre l'emplacement de départ et l'au moins un emplacement reçu devant être visité par le véhicule.

13. Système selon l'une quelconque des revendications 11 à 12, dans lequel l'appareil de commande est configuré pour ajuster l'itinéraire planifié sur la base de la comparaison de l'itinéraire planifié et de l'itinéraire le plus court en réalisant des actions comprenant :
la réduction de la distance totale de l'itinéraire planifié.

14. Système selon l'une quelconque des revendications 11 à 13, dans lequel :
l'appareil de réception est agencé pour recevoir l'itinéraire le plus court commençant à l'emplacement de départ et comportant l'au moins un emplacement devant être visité par le véhicule ; ou
l'appareil de commande est agencé pour déterminer l'itinéraire le plus court commençant à l'emplacement de départ et comportant l'au moins un emplacement devant être visité par le véhicule.

15. Système selon l'une quelconque des revendications 11 à 14, dans lequel au moins :
le système comprend en outre un appareil de capteur agencé pour détecter des conditions météorologiques actuelles, l'appareil de commande étant agencé pour réaliser un ajustement de l'itinéraire planifié sur la base des conditions météorologiques actuelles détectées ; ou
l'appareil de commande est agencé pour prédire des conditions météorologiques futures et réaliser un ajustement de l'itinéraire planifié sur la base des conditions météorologiques futures prédites.
